(19) Europäisches Patentamt
European Patent Office
Office européen des brevets

(11) **EP 4 773 537 A1**

(12) **EUROPEAN PATENT APPLICATION**
published in accordance with Art. 153(4) EPC

(43) Date of publication:
**08.07.2026 Bulletin 2026/28**

(21) Application number: **24869709.6**

(22) Date of filing: **30.04.2024**

(51) International Patent Classification (IPC):
***H04L 5/00*** *(2006.01)*

(52) Cooperative Patent Classification (CPC):
**H04B 17/30; H04L 5/00**

(86) International application number:
**PCT/CN2024/090896**

(87) International publication number:
**WO 2025/066141 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 CN 202311270791**

(71) Applicant: **ZTE Corporation**
**Shenzhen, Guangdong 518057 (CN)**

(72) Inventors:
• **LU, Guangyan**
**Shenzhen, Guangdong 518057 (CN)**

• **CHEN, Yijian**
**Shenzhen, Guangdong 518057 (CN)**
• **YANG, Jun**
**Shenzhen, Guangdong 518057 (CN)**
• **YE, Xinquan**
**Shenzhen, Guangdong 518057 (CN)**
• **WANG, Yunlu**
**Shenzhen, Guangdong 518057 (CN)**
• **ZHANG, Shujuan**
**Shenzhen, Guangdong 518057 (CN)**
• **YU, Hongkang**
**Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **METHOD AND APPARATUS FOR ACQUIRING CHANNEL INFORMATION, AND STORAGE MEDIUM**

(57) The embodiments of the present disclosure relate to the technical field of communications. Provided are a method and apparatus for acquiring channel information, and a storage medium, which are used for reducing the processing complexity of acquiring channel information. The method comprises: on the basis of measurement for a first channel measurement reference signal, obtaining first indication information corresponding to first channel information, and on the basis of the first channel information and first configuration information, obtaining second indication information corresponding to second channel information, wherein the first configuration information is used for configuring a relationship between the first indication information and the second indication information.

EP 4 773 537 A1

On the basis of measurement for a first channel measurement reference signal, obtain first indication information corresponding to first channel information — S101

On the basis of the first channel information and first configuration information, obtain second indication information corresponding to second channel information — S102

FIG. 3

## Description

The present disclosure claims priority to a Chinese Patent Application No. 202311270791.5, filed on September 27, 2023, the entire content of which is incorporated in the present disclosure by reference.

TECHNICAL FIELD

The present disclosure relates to the technical field of communications, and in particular, to a method and an apparatus for acquiring channel information, and a storage medium.

BACKGROUND

With the continuous increase in people's demand for communication, the continuous expansion of communication scenarios, and the continuous deepening of the incorporation of information theory and wireless electromagnetic wave theory, the coordinated processing of near-field spherical waves with distributed multi-device and multi-resource (which may correspond to resources of multiple channel measurement reference signals) has received increasing attention from researchers. The above coordinated processing may be gradually expanded to more applicable scenarios, such as indoor and outdoor venues with high-density and large-capacity demands, and smart factories with multi-device with dispersed deployment, etc.

In the coordinated processing, it is necessary to acquire relatively accurate channel information. However, the existing information processing mechanism has high processing complexity in acquiring channel information, and the acquired channel information cannot well reflect the channel state corresponding to some distributed scenarios, thereby generating information deviation and impacting the performance of the communication system.

SUMMARY

The present disclosure provides a method and an apparatus for acquiring channel information, and a storage medium, which are used to reduce the processing complexity of acquiring channel information.

To achieve the above purpose, the present disclosure adopts the following technical solution.

In a first aspect, a method for acquiring channel information is provided. The method includes:

acquiring first indication information corresponding to first channel information based on a measurement of a first channel measurement reference signal; and
acquiring second indication information corresponding to second channel information based on the first indication information and first configuration information, wherein the first configuration information is used to configure a relationship between the first indication information and the second indication information.

In a second aspect, a method for acquiring channel information is provided. The method includes:

acquiring second configuration information, wherein the second configuration information is used to configure a corresponding relationship in value ranges between first indication information corresponding to first channel information and second indication information corresponding to second channel information;
acquiring the first indication information based on the second configuration information and a measurement of a first channel measurement reference signal; and
acquiring the second indication information based on the second configuration information and a measurement of a second channel measurement reference signal.

In a third aspect, a communication apparatus is provided. The apparatus includes:

a processing unit, configured to: acquire first indication information corresponding to first channel information based on a measurement of a first channel measurement reference signal; and acquire second indication information corresponding to second channel information based on the first indication information and first configuration information, wherein the first configuration information is used to configure a relationship between the first indication information and the second indication information.

In a fourth aspect, a communication apparatus is provided. The apparatus includes:

an acquisition unit, configured to acquire second configuration information, wherein the second configuration information is used to configure a corresponding relationship in value ranges between first indication information corresponding to first channel information and second indication information corresponding to second channel information; and

a processing unit, configured to: acquire the first indication information based on the second configuration information and a measurement of a first channel measurement reference signal; and acquire the second indication information based on the second configuration information and a measurement of a second channel measurement reference signal.

In a fifth aspect, a communication apparatus is provided, including: a processor and a memory. The memory stores instructions executable by the processor. The processor, upon being configured to execute the instructions, enables the communication apparatus to implement the method provided in any one of the first aspect or the second aspect described above.

In a sixth aspect, a computer-readable storage medium is provided. The computer-readable storage medium stores computer instructions. Upon the computer instructions being run on a computer, the computer is enabled to perform the method provided in any one of the first aspect or the second aspect described above.

In a seventh aspect, a computer program product containing computer instructions is provided. Upon the computer instructions being run on a computer, the computer is enabled to perform the method provided in any one of the first aspect or the second aspect described above.

In the embodiments of the present disclosure, after acquiring the first indication information corresponding to the first channel information based on the measurement of the first channel measurement reference signal, the second indication information corresponding to the second channel information may be obtained based on the first indication information and the relationship between the first indication information and the second indication information, indicated by the first configuration information, that is, the independent first indication information and second indication information are associated, and the second indication information may be obtained based on the first indication information and the first configuration information, which reduces the processing complexity of acquiring channel information and helps to improve the performance of a communication system.

## BRIEF DESCRIPTION OF THE DRAWINGS

The drawings are used to provide further understanding of the technical solutions of the present disclosure and form a part of the specification, and they are used together with the embodiments of the present disclosure to explain the technical solutions of the present disclosure, but do not limit the technical solutions of the present disclosure.

FIG. 1 is a schematic diagram of acquiring and feeding back indication information provided in the embodiments of the present disclosure.

FIG. 2 is a structural schematic diagram of a communication system provided in the embodiments of the present disclosure.

FIG. 3 is a flowchart schematic diagram of a method for acquiring channel information provided in the embodiments of the present disclosure.

FIG. 4 is a flowchart schematic diagram of another method for acquiring channel information provided in the embodiments of the present disclosure.

FIG. 5 is a flowchart schematic diagram of another method for acquiring channel information provided in the embodiments of the present disclosure.

FIG. 6 is a flowchart schematic diagram of another method for acquiring channel information provided in the embodiments of the present disclosure.

FIG. 7 is a flowchart schematic diagram of another method for acquiring channel information provided in the embodiments of the present disclosure.

FIG. 8 is a composition schematic diagram of a communication apparatus provided in the embodiments of the present disclosure.

FIG. 9 is a composition schematic diagram of another communication apparatus provided in the embodiments of the present disclosure.

FIG. 10 is a structural schematic diagram of a communication apparatus provided in the embodiments of the present disclosure.

## DETAILED DESCRIPTION

Embodiments of the present disclosure will be clearly and completely described below with reference to the drawings in the embodiments of the present disclosure. It is obvious that the described embodiments are only a part of the embodiments of the present disclosure, rather than all of the embodiments. Based on the embodiments in this disclosure, all other embodiments obtained by those ordinary skilled in the art without creative work belong to the scope of protection in this disclosure.

Unless the context otherwise requires, throughout the specification and the claims, the term "comprise/include" and variations thereof such as the third person singular form "comprises" and the present participle form "comprising", are interpreted as open and inclusive, i.e., as "including, but not limited to". In the description of the specification, terms such as "one embodiment," "some embodiments," "exemplary embodiments," "example," "specific example," or "some examples" are intended to indicate that a specific feature, structure, material, or characteristic related to the embodiment or example is included in at least one embodiment or example of the present disclosure. The schematic representation for the above terms does not necessarily refer to a same embodiment or example. Furthermore, the described specific feature, structure, material, or characteristic may be included in any one or more of the embodiments or examples in any appropriate manner.

The terms "first" and "second" are used for descriptive purposes only and are not to be construed as indicating or implying relative importance or implicitly indicating the number of the specified technical features. Thus, features defined with "first" or "second" may explicitly or implicitly include one or more of such features. In the description of the present disclosure, unless otherwise specified, the term "multiple/plurality of" means two or more.

In the embodiments of the present disclosure, terms such as "exemplary (exemplarily)" or "for example (e.g., such as)" are used to indicate an example, illustration, or explanation. Any embodiment or design solution described with "exemplary (exemplarily)" or "for example (e.g., such as)" in the embodiments of the present disclosure should not be interpreted as being more preferable or advantageous than other embodiments or design solutions. Rather, the use of terms such as "exemplary (exemplarily)" or "for example (e.g., such as)" is intended to present related concepts in a specific manner.

In addition, the use of "based on" means openness and inclusiveness, as a process, step, calculation, or other actions "based on" one or more described conditions or values may, in practice, be based on additional conditions or beyond those described values.

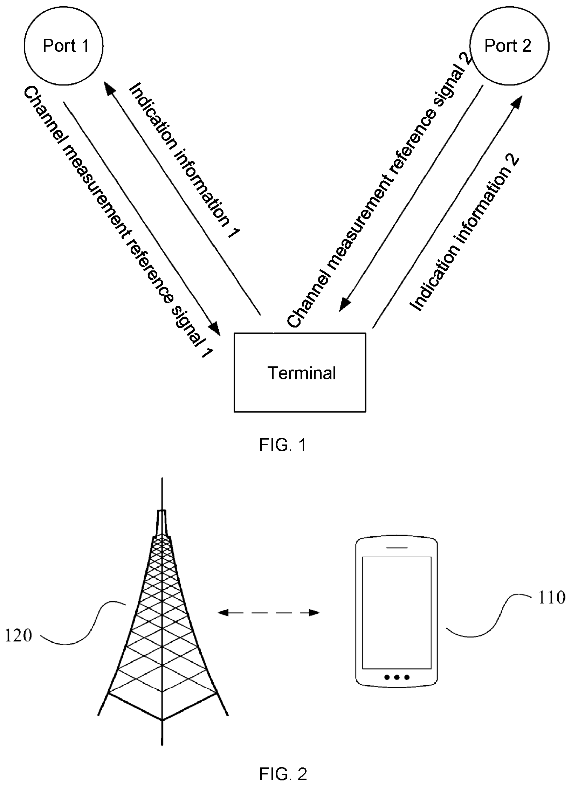

In existing communication standardization protocols, a wireless channel model takes far-field plane waves and communication between dual devices as a fundamental assumption, based on which, the corresponding channel codebook and channel information feedback mechanism are designed. An existing method for acquiring and feeding back channel information may be as shown in FIG. 1 below. Referring to FIG. 1, a terminal receives channel measurement reference signals sent from different ports (different ports may correspond to different base stations, different antenna array panels on a same base station, or different array element ports on a same antenna array panel). For example, the terminal receives a channel measurement reference signal 1 sent from a port 1 and receives a channel measurement reference signal 2 sent from a port 2, thereby acquiring channel information corresponding to each channel measurement reference signal and indication information corresponding to the channel information. Then, the terminal feeds back the indication information of the channel information through a pre-agreed manner (e.g., by agreeing on a same codebook and a same feedback mode). In this way, on one hand, the channel information is related to specific angle information. On the other hand, for different channel measurement reference signals, the terminal independently performs an acquisition and feedback procedure for the channel information, without considering a possible association between this channel information (or indication information) and other channel information (or indication information). For example, continuing to refer to FIG. 1, indication information 1 is obtained only from the channel measurement reference signal 1 and is unrelated to the channel measurement reference signal 2 or indication information 2. That is, indication information 1 is determined by the channel measurement reference signal 1, and indication information 2 is determined by the channel measurement reference signal 2, with no association between the channel measurement reference signal 1 and the channel measurement reference signal 2. In this way, it leads to higher processing complexity for acquiring channel information. In coordinated processing, if the existing method for acquiring and feeding back channel information continues to be used, due to the high processing complexity for acquiring channel information, the acquired channel information may not well reflect the channel state corresponding to some distributed scenarios, i.e., information deviation occurs, thereby affecting the performance of the communication system.

Based on this, how to reduce the processing complexity for acquiring channel information is a technical problem that urgently needs to be solved.

Based on this, the embodiments of the present disclosure provide a method and an apparatus for acquiring channel information, and a storage medium, where after acquiring first indication information corresponding to first channel information based on a measurement of a first channel measurement reference signal, second indication information corresponding to second channel information may be obtained based on the first indication information and a relationship between the first indication information and the second indication information, indicated by first configuration information, that is, the independent first indication information and second indication information are associated, and the second indication information may be obtained based on the first indication information and the first configuration information, thereby reducing the processing complexity for acquiring channel information and helping to improve the performance of the communication system.

The solution according to the embodiments of the present disclosure is described below with reference to the drawings.

The technical solution provided ib the embodiments of the present disclosure may be applied to various mobile communication networks, for example, a new radio (NR) mobile communication network using the fifth generation (5G) mobile communication technology, a future mobile communication network, or various communication fusion systems, etc., which is not limited in the embodiments of the present disclosure.

FIG. 2 is a structural schematic diagram of a communication system provided in the embodiments of the present disclosure. As shown in FIG. 1, the communication system includes, but is not limited to, a terminal 110 and a base station 120. Wireless signal transmission, reception, and related interactions may be performed between the terminal 110 and the base station 120.

In a wireless communication scenario, the terminal 110 communicates with the base station 120 via a wireless channel.

The terminal 110 may be a device having a wireless transceiver function, for example, a mobile phone, a tablet computer, a wearable device, a vehicle-mounted device, an augmented reality (augmented reality, AR)/virtual reality (virtual reality, VR) device, a laptop, an ultra-mobile personal computer (ultra-mobile personal computer, UMPC), a netbook, or a personal digital assistant (personal digital assistant, PDA), etc. The embodiments of the present disclosure do not limit the specific type of the terminal.

The base station 120 may be any node of an evolution base station (evolution nodeB, eNB), a next generation base station (generation nodeB, gNB), a reception and transmission point (transmission receive point, TRP), a transmission point (TP), and some other access node. According to the size of the service coverage area provided, base stations may be further divided into a macro base station for providing a macro cell, a pico base station for providing a pico cell, and a femto base station for providing a femto cell. With the continuous evolution of wireless communication technology, future base stations may also adopt other names.

It should be understood that FIG. 2 is an exemplary structural diagram, and the number of devices included in the communication system shown in FIG. 2 is not limited, for example, the number of base stations and terminals is not limited. Moreover, in addition to the devices shown in FIG. 2, the communication system shown in FIG. 2 may further include other devices, which are not limited thereto.

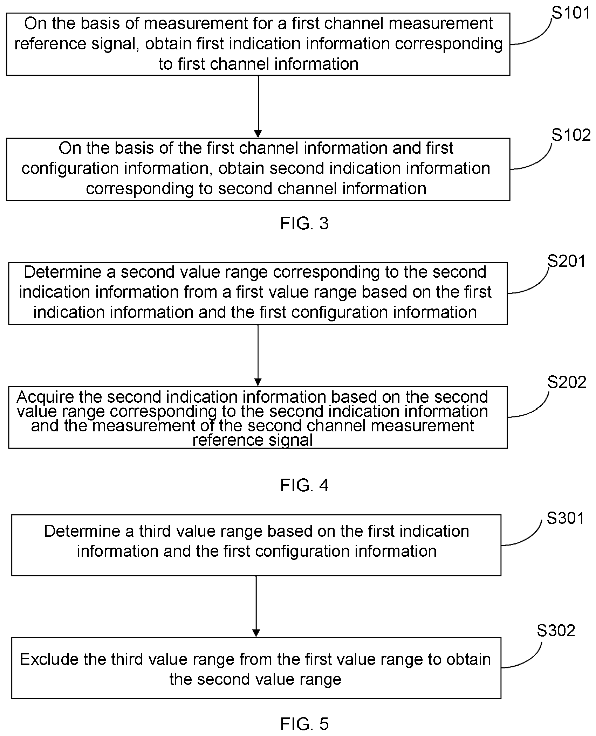

Next, as shown in FIG. 3, the embodiment of the present disclosure provides a method for acquiring channel information. The method is applied to a terminal, which may be the terminal 110 described in FIG. 2 above. The method includes the following step S101 and step S102.

S101: acquire first indication information corresponding to first channel information based on a measurement of a first channel measurement reference signal.

In some embodiments, in a case where the terminal receives a first channel measurement reference signal sent from a network side, the terminal performs measurement on the first channel measurement reference signal to obtain first channel information and first indication information corresponding to the first channel information. The network side may be a base station.

In some embodiments, the first channel information is channel state information.

In some embodiments, the first indication information is precoding matrix indication information.

S102: acquire second indication information corresponding to second channel information based on the first indication information and first configuration information.

In some embodiments, after acquiring the first indication information, the terminal may obtain second indication information corresponding to second channel information based on the first indication information and the first configuration information. The first configuration information is used to configure a relationship between the first indication information and the second indication information. The first configuration information is pre-configured, or configured by the network side, and the network side may be a base station.

As an example, the first configuration information includes a first parameter and a first function. The first parameter is used to represent a spacing between the first indication information and the second indication information, and the spacing is an integer; that is, the spacing may be a positive integer or a negative integer.

It should be understood that, in a case where the spacing is a positive integer, it represents that the first indication information is located on a left side of the second indication information; in a case where the spacing is a negative integer, it represents that the first indication information is located on a right side of the second indication information.

In some embodiments, the spacing between the first indication information and the second indication information may be an average spacing between the first indication information and the second indication information.

In some embodiments, the first function is used to constrain a value of the second indication information to be within a first value range. The first value range may be pre-configured, or may be included in the first configuration information.

As a possible example, the first function is specifically used to: in a case where a first value is within the first value range, determine that the value of the second indication information is the first value; in a case where the first value is greater than an upper limit of the first value range, determine that the value of the second indication information is the upper limit of the first value range; in a case where the first value is less than a lower limit of the first value range, determine that the value of the second indication information is the lower limit of the first value range. The first value is determined according to the value of the first indication information and the first parameter.

As an example, the first value is a sum of the value of the first indication information and the first parameter. The first value may also be a difference between the value of the first indication information and the first parameter, a quotient of the value of the first indication information and the first parameter, a product of the value of the first indication information and the first parameter, or the like, and the embodiments of the present disclosure do not limit the specific setting of the first value.

Exemplarily, acquiring the second indication information corresponding to the second channel information based on the first indication information and the first configuration information, may be shown as the following Formula (1) or Formula (2):

$$i_2 = f_{1,2}^1 \ (i_1, \Delta i_{1,2}^1) = max \{i_{min}, min \{i_{max}, i_1 + \Delta i_{1,2}^1\}\} \qquad \text{Formula (1);}$$

$$i_2 = f_{1,2}^1 \ (i_1, \Delta i_{1,2}^1) = min \{i_{max}, max \{i_{min}, i_1 + \Delta i_{1,2}^1\}\} \qquad \text{Formula (2);}$$

where in the above Formula (1) and Formula (2), $i_1$ is the first indication information, $i_2$ is the second indication information, $f_{1,2}^1$ is the first function, $\Delta i_{1,2}^1$ is the first parameter, $i_{min}$ is the lower limit of the first value range, and $i_{max}$ is the upper limit of the first value range.

It can be seen from the above Formula (1) and Formula (2) that, based on the constraint of the first function, the value of the second indication information is within the first value range.

In some embodiments, the value of the first indication information is within the first value range; that is, the value of the first indication information and the value of the second indication information may both be within the first value range.

As a possible example, the second indication information may be an indication information group, and the indication information group includes a plurality of pieces of indication information. That is, the indication information group may be determined based on the first indication information and the first configuration information, and the indication information group includes a plurality of pieces of indication information corresponding to a plurality of pieces of channel information, thereby reducing the processing complexity of acquiring channel information.

Based on the embodiments shown in FIG. 3, after acquiring the first indication information corresponding to the first channel information based on the measurement of the first channel measurement reference signal, the second indication information corresponding to the second channel information may be obtained based on a relationship between the first indication information and the second indication information indicated by the first configuration information and the first indication information, that is, without measuring the second channel measurement reference signal, the second indication information corresponding to the second channel measurement reference signal may be obtained based on the relationship between the first indication information and the second indication information, which associates the independent first indication information and second indication information, thereby reducing the processing complexity of acquiring channel information, helping to reduce overhead for subsequent feedback of indication information, and improving the performance of the communication system.

The above embodiments are described by taking an example of acquiring the second indication information corresponding to the second channel measurement reference signal without measuring the second channel measurement reference signal; in some embodiments, as shown in FIG. 4, the above step S102 may also be implemented as the following steps S201 and S202.

S201: determine a second value range corresponding to the second indication information from a first value range based on the first indication information and the first configuration information.

In some embodiments, after the terminal acquires the first indication information, in order to quickly obtain the second indication information to reduce the processing complexity of acquiring channel information, the terminal may, based on the first indication information and the first configuration information, determine a second value range corresponding to the second indication information from the first value range. In this way, the second indication information may then be determined based on the smaller second value range, instead of the second indication information being determined from the larger first value range, which can reduce the processing complexity of acquiring channel information.

The following describes, with reference to several examples, determining, based on the first indication information and the first configuration information, the second value range corresponding to the second indication information from the first value range.

Example 1: the first configuration information includes a second parameter, a third parameter, a second function, a third function, and a fourth function.

The second parameter is used to represent a spacing between the first indication information and a reference point of the second value range, the third parameter is used to represent a size of the second value range, the second function is used to constrain the reference point of the second value range to be within the first value range, the third function is used to constrain a lower limit of the second value range to be within the first value range, and the fourth function is used to constrain an upper limit of the second value range to be within the first value range.

As a possible example, based on Example 1, determining the second value range corresponding to the second indication information from the first value range based on the first indication information and the first configuration information, may include the following steps A1 to A5.

A1: determine a second value based on the first indication information and the second parameter.

The second value may be a sum of the first indication information and the second parameter, or may be a difference between the first indication information and the second parameter, a quotient of the first indication information and the second parameter, a product of the first indication information and the second parameter, or the like, and the embodiments of the present disclosure do not limit thereto. For ease of description, the embodiments of the present disclosure are described by taking an example in which the second value is the sum of the first indication information and the second parameter.

A2: determine the reference point of the second value range based on the second value, the first value range, and the second function.

Exemplarily, A2 may be shown as the following Formula (3) and Formula (4).

$$\bar{i}_2 = f_{1,2}^2 \ (i_1, \Delta i_{1,2}{}^2) \ = max \ \{i_{min}, min \ \{i_{max}, i_1 + \Delta i_{1,2}{}^2\}\} \qquad \text{Formula (3);}$$

$$\bar{i}_2 = f_{1,2}^2 \ (i_1, \Delta i_{1,2}{}^2) \ = min \ \{i_{max}, max \ \{i_{min}, i_1 + \Delta i_{1,2}{}^2\}\} \qquad \text{Formula (4);}$$

where in the above Formula (3) to Formula (4), $\bar{i}_2$ is the reference point of the second value range, $f_{1,2}^2$ is the second function, $\Delta i_{1,2}{}^2$ is the second parameter, and $i_1 + \Delta i_{1,2}{}^2$ is the second value.

It can be seen from the above Formula (3) and Formula (4) that, under the constraint of the second function, in a case where the second value is within the first value range, a value of the reference point of the second value range is determined as the second value. In a case where the second value is greater than the upper limit of the first value range, the value of the reference point of the second value range is determined as the upper limit of the first value range. In a case where the second value is less than the lower limit of the first value range, the value of the reference point of the second value range is determined as the lower limit of the first value range.

In some embodiments, the reference point may also have other names, for example, a referred point.

A3: obtain the lower limit of the second value range based on the reference point of the second value range, the third parameter, and the third function.

A4: obtain the upper limit of the second value range based on the reference point of the second value range, the third parameter, and the fourth function.

Exemplarily, A3 and A4 may be shown as the following Formula (5) and Formula (6):

$$i_{2,min} = f_{1,2}^3(\bar{i}_2, \delta_{1,2}) = max \ \{i_{min}, \bar{i}_2 - |\delta_{1,2}|\} \qquad \text{Formula (5);}$$

$$i_{2,max} = f_{1,2}^4(\bar{i}_2, \delta_{1,2}) = min \ \{i_{max}, \bar{i}_2 + |\delta_{1,2}|\} \qquad \text{Formula (6);}$$

Where in the above Formula (5) and Formula (6), $i_{2,min}$ is the lower limit of the second value range, $i_{2,max}$ is the upper limit of the second value range, $i_{min}$ is the lower limit of the first value range, $i_{max}$ is the upper limit of the first value range, $\delta_{1,2}$ is the third parameter, $f3_{1,2}$ is the third function, and $f_{1,2}^4$ is the fourth function.

It can be seen from the above Formula (5) that, under the constraint of the third function, in a case where a difference between the reference point of the second value range and an absolute value of the third parameter is less than the lower limit of the first value range, a value of the lower limit of the second value range is determined as the lower limit of the first value range; in a case where the difference between the reference point of the second value range and the absolute value of the third parameter is greater than the lower limit of the first value range, a value of the lower limit of the second value range is determined as the difference between the reference point of the second value range and the absolute value of the third parameter.

It can be seen from the above Formula (6) that, under the constraint of the fourth function, in a case where a sum of the reference point of the second value range and the absolute value of the third parameter is less than the upper limit of the first value range, a value of the upper limit of the second value range is determined as the sum of the reference point of the second value range and the absolute value of the third parameter; in a case where the sum of the reference point of the second value range and the absolute value of the third parameter is greater than the upper limit of the first value range, a value of the upper limit of the second value range is determined as the upper limit of the first value range.

A5: obtain the second value range corresponding to the second indication information based on the lower limit and the upper limit of the second value range and the first value range.

It should be understood that after $i_{2,min}$ and $i_{2,max}$ are obtained, $[i_{2,min}, i_{2,max}]$ is the second value range.

As an example, to ensure accuracy of the second value range and avoid an error, an intersection of the second value range and the first value range may be taken as the second value range corresponding to the second indication information, that is, $[i_{2,min}, i_{2,max}] \cap I$ is taken as the second value range corresponding to the second indication information, where I is the first value range.

Example 2: the first configuration information includes a second parameter, a fourth parameter, a fifth parameter, a second function, a third function, and a fourth function.

The fourth parameter is used to represent the spacing between the reference point of the second value range and the lower limit of the second value range, and the fifth parameter is used to represent the spacing between the reference point of the second value range and the upper limit of the second value range. For the descriptions of the second parameter, the second function, the third function, and the fourth function, reference may be made to the corresponding description in the aforementioned Example 1, which is not repeated here.

As a possible example, based on Example 2, the aforementioned determining the second value range corresponding to the second indication information from the first value range based on the first indication information and the first configuration information, may include the following steps B1 to B5.

B1: determine a second value based on the first indication information and the second parameter.

B2: determine the reference point of the second value range based on the second value, the first value range, and the second function.

Regarding the descriptions of B1 to B2, reference may be made to the aforementioned descriptions for A1 to A2, which is not repeated here.

B3: obtain an optional lower limit of the second indication information based on the reference point of the second value range, the fourth parameter, and the third function.

B4: obtain an optional upper limit of the second indication information based on the reference point of the second value range, the fifth parameter, and the fourth function.

For example, B3 and B4 may be as shown in the following Formula (7) and Formula (8):

$$i_{2,min} = f_{1,2}^3(\bar{i}_2, \delta_{1,2,L}) = max\left\{i_{min}, \bar{i}_2 - |\delta_{1,2,L}|\right\} \qquad \text{Formula (7);}$$

$$i_{2,max} = f_{1,2}^4(\bar{i}_2, \delta_{1,2,R}) = min\left\{i_{min}, \bar{i}_2 + |\delta_{1,2R}|\right\} \qquad \text{Formula (8);}$$

where in the aforementioned Formula (7) and Formula (8), $i_{2,min}$ is the lower limit of the second value range, $i_{2,max}$ is the upper limit of the second value range, $i_{max}$ is the lower limit of the first value range, $i_{max}$ is the upper limit of the first value range, $\delta_{1,2,L}$ is the fourth parameter, and $\delta_{1,2,R}$ is the fifth parameter.

It can be seen from the aforementioned Formula (7) that, under constraint of the third function, in a case where the difference between the reference point of the second value range and the absolute value of the fourth parameter is less than the lower limit of the first value range, a value of the lower limit of the second value range is determined as the lower limit of the first value range; in a case where the difference between the reference point of the second value range and the absolute value of the fourth parameter is greater than the lower limit of the first value range, a value of the lower limit of the second value range is determined as the difference between the reference point of the second value range and the absolute value of the fourth parameter.

It can be seen from the aforementioned Formula (8) that, under the constraint of the fourth function, in a case where the sum of the reference point of the second value range and the absolute value of the fifth parameter is less than the upper limit of the first value range, a value of the upper limit of the second value range is determined as the sum of the reference point of the second value range and the absolute value of the fifth parameter; in a case where the sum of the reference point of the second value range and the absolute value of the fifth parameter is greater than the upper limit of the first value range, a value of the upper limit of the second value range is determined as the upper limit of the first value range.

B5: obtain the second value range corresponding to the second indication information based on the lower limit and the upper limit of the second value range and the first value range.

For the description of B5, reference may be made to the aforementioned description for A5, which is not repeated here.

It should be understood that, in the aforementioned Example 1, the reference point of the second value range may be understood as a center point of the second value range. In the aforementioned Example 2, in a case where the

value of $\delta_{1,2,L}$ and the value of $\delta_{1,2,R}$ are the same, the reference point of the second value range may also be understood as the center point of the second value range; and in a case where the value of $\delta_{1,2,L}$ and the value of $\delta_{1,2,R}$ are different, the reference point of the second value range is not the center point of the second value range, and may be understood as a base point of the second value range.

S202: obtain the second indication information based on the second value range corresponding to the second indication information and the measurement of the second channel measurement reference signal.

In some embodiments, in a case where the second value range corresponding to the second indication information is obtained, after the terminal receives the second measurement reference signal sent from the network side, the terminal may measure the second channel measurement reference signal to obtain second channel information, and then obtain the second indication information based on the second channel information and the second value range corresponding to the second indication information.

Based on the embodiments shown in FIG. 4, after the first indication information is obtained, the second value range corresponding to the second indication information may be obtained based on the first indication information and the first configuration information; then, after the second channel measurement reference signal is received, the second indication information may be obtained based on the second value range corresponding to the second indication information and the second channel information. In this way, the second indication information may be determined from the relatively smaller second value range, thereby avoiding determining the second indication information from the relatively larger first value range, which reduces the value range of the second indication information, thereby reducing the processing complexity for acquiring channel information, helping to reduce the overhead of feeding back indication information subsequently, and improving the performance of the communication system.

In some embodiments, as shown in FIG. 5, the aforementioned step S102 may include the following steps S301 and S302.

S301: determine a third value range based on the first indication information and the first configuration information.

The third value range may be understood as a non-optional range of the second indication information.

In some embodiments, after the terminal obtains the first indication information, in order to quickly obtain the second indication information to reduce the processing complexity for acquiring channel information, the terminal may determine the non-optional range of the second indication information, that is, determine the third value range, based on the first indication information and the first configuration information, and then determine the second value range corresponding to the second indication information based on the non-optional range of the second indication information.

Examples of determining the third value range based on the first indication information and the first configuration information are provided below in combination with several examples.

Example 3: the first configuration information includes a sixth parameter, a seventh parameter, a fifth function, a sixth function, and a seventh function.

The sixth parameter is used to represent the spacing between the first indication information and a reference point of the third value range; the seventh parameter is used to represent the size of the third value range; the fifth function is used to constrain the reference point of the third value range to be within the first value range; the sixth function is used to constrain a lower limit of the third value range to be within the first value range; and the seventh function is used to constrain an upper limit of the third value range to be within the first value range.

As a possible example, based on Example 3, the aforementioned determining the third value range based on the first indication information and the first configuration information, may include the following steps C1 to C5.

C1: determine a third value based on the first indication information and the sixth parameter.

The third value may be a sum of the first indication information and the sixth parameter, or may be a difference between the first indication information and the sixth parameter, a quotient of the first indication information and the sixth parameter, a product of the first indication information and the sixth parameter, or the like, which is not limited in the embodiments of the present disclosure. For ease of description, the embodiments of the present disclosure are described by taking the third value being the sum of the first indication information and the sixth parameter as an example.

C2: determine the reference point of the third value range based on the third value, the first value range, and the fifth function.

For example, C2 may be as shown in the following Formula (9) and Formula (10).

$$\bar{i}_3 = f_{1,2}^5 \left( i_1, \Delta i_{1,2}{}^3 \right) = max\ \{i_{min}, min\ \{i_{max}, i_1 + \Delta i_{1,2}{}^3\}\} \qquad \text{Formula (9)};$$

$$\bar{i}_3 = f_{1,2}^5 \left( i_1, \Delta i_{1,2}{}^3 \right) = min\ \{i_{max}, max\ \{i_{min}, i_1 + \Delta i_{1,2}{}^3\}\} \qquad \text{Formula (10)};$$

where in the aforementioned Formula (9) to Formula (10), $\bar{i}_3$ is the reference point of the third value range, $f_{1,2}^5$ is the fifth

function, $\Delta i_{1,2}{}^3$ is the sixth parameter, and $i_1 + \Delta i_{1,2}{}^3$ is the third value.

It can be seen from the aforementioned Formula (9) and Formula (10) that, under the constraint of the fifth function, in a case where the third value is located within the first value range, the reference point of the third value range is determined as the third value. In a case where the third value is greater than the upper limit of the first value range, the value of the reference point of the third value range is determined as the upper limit of the first value range. In a case where the third value is less than the lower limit of the first value range, the value of the reference point of the third value range is determined as the lower limit of the first value range.

C3: obtain the lower limit of the third value range based on the reference point of the third value range, the seventh parameter, and the sixth function.

C4: obtain the upper limit of the third value range based on the reference point of the third value range, the seventh parameter, and the seventh function.

For example, C3 and C4 may be as shown in the following Formula (11) and Formula (12).

$$i_{3,min} = f^6_{1,2}\left(\bar{i}_3, \delta_{1,2}\right) = max\left\{i_{min}, \bar{i}_3 - \left|\delta_{1,2}\right|\right\} \qquad \text{Formula (11);}$$

$$i_{3,max} = f^7_{1,2}\left(\bar{i}_3, \delta_{1,2}\right) = min\left\{i_{max}, \bar{i}_3 + \left|\delta_{1,2}\right|\right\} \qquad \text{Formula (12);}$$

where in the aforementioned Formula (11) and Formula (12), $i_{3,min}$ is the lower limit of the third value range, $i_{3,max}$ is the upper limit of the third value range, $i_{min}$ is the lower limit of the first value range, $i_{max}$ is the upper limit of the first value range, $\delta_{1,2}$ is the seventh parameter, $f^6_{1,2}$ is the sixth function, and $f^7_{1,2}$ is the seventh function.

It can be seen from the aforementioned Formula (11) that, under the constraint of the sixth function, in a case where the difference between the reference point of the third value range and the absolute value of the seventh parameter is less than the lower limit of the first value range, the value of the lower limit of the third value range is determined as the lower limit of the first value range; in a case where the difference between the reference point of the third value range and the absolute value of the seventh parameter is greater than the lower limit of the first value range, the value of the lower limit of the third value range is determined as the difference between the reference point of the third value range and the absolute value of the seventh parameter.

It can be seen from the aforementioned Formula (12) that, under the constraint of the seventh function, in a case where the sum of the reference point of the third value range and the absolute value of the seventh parameter is less than the upper limit of the first value range, the value of the upper limit of the third value range is determined as the sum of the reference point of the third value range and the absolute value of the seventh parameter; in a case where the sum of the reference point of the third value range and the absolute value of the seventh parameter is greater than the upper limit of the first value range, the value of the upper limit of the third value range is determined as the upper limit of the first value range.

C5: obtain a third value range based on the lower limit and the upper limit of the third value range and the first value range.

After acquiring $i_{3,min}$ and $i_{3,max}$, $[i_{3,min}, i_{3,max}]$ is the third value range.

As an example, to ensure the accuracy of the third value range and avoid an error, an intersection of the third value range and the first value range may be taken as the third value range, that is, $[i_{3,min}, i_{3,max}] \cap I$ is taken as the third value range.

Example 4: The first configuration information includes a sixth parameter, an eighth parameter, a ninth parameter, a fifth function, a sixth function, and a seventh function.

The sixth parameter is used to represent a spacing between the first indication information and a reference point of the third value range; the eighth parameter is used to represent a spacing between the reference point of the third value range and a lower limit of the third value range; the ninth parameter is used to represent a spacing between the reference point of the third value range and an upper limit of the third value range; the fifth function is used to constrain the reference point of the third value range to be within the first value range; the sixth function is used to constrain the lower limit of the third value range to be within the first value range; and the seventh function is used to constrain the upper limit of the third value range to be within the first value range.

As a possible example, based on Example 4, the above determining the third value range based on the first indication information and the first configuration information, may include the following steps D1 to D5.

D1: determine a third value based on the first indication information and the sixth parameter.

D2: determine a reference point of the third value range based on the third value, the first value range, and the fifth function.

The descriptions for D1 to D2 may refer to the above descriptions for C1 to C2, which are not repeated herein.

D3: determine the lower limit of the third value range based on the reference point of the third value range, the eighth parameter, and the sixth function.

D4: determine the upper limit of the third value range based on the reference point of the third value range, the ninth parameter, and the seventh function.

For example, D3 and D4 may be as shown in the following Formula (13) and Formula (14).

$$i_{3,min} = f_{1,2}^6(\bar{i}_3, \delta_{1,2,L}') = max\{i_{min}, \bar{i}_3 - |\delta_{1,2,L}'|\} \qquad \text{Formula (13)};$$

$$i_{3,max} = f_{1,2}^7(\bar{i}_3, \delta_{1,2,R}') = min\{i_{min}, \bar{i}_3 + |\delta_{1,2,R}'|\} \qquad \text{Formula (14)};$$

where in the above Formula (13) and Formula (14), $i_{3,min}$ is the lower limit of the third value range, $i_{3,max}$ is the upper limit of the third value range, $i_{min}$ is the lower limit of the first value range, $i_{max}$ is the upper limit of the first value range, $\delta_{1,2,L}'$ is the eighth parameter, and $\delta_{1,2,R}'$ is the ninth parameter.

As can be seen from the above Formula (13), under the constraint of the sixth function, in a case where a difference between the reference point of the third value range and an absolute value of the eighth parameter is less than the lower limit of the first value range, a value of the lower limit of the third value range is determined to be the lower limit of the first value range; in a case where the difference between the reference point of the third value range and the absolute value of the eighth parameter is greater than the lower limit of the first value range, the value of the lower limit of the third value range is determined to be the difference between the reference point of the third value range and the absolute value of the eighth parameter.

As can be seen from the above Formula (14), under the constraint of the seventh function, in a case where a sum of the reference point of the third value range and an absolute value of the ninth parameter is less than the upper limit of the first value range, a value of the upper limit of the third value range is determined to be the sum of the reference point of the third value range and the absolute value of the ninth parameter; in a case where the sum of the reference point of the third value range and the absolute value of the ninth parameter is greater than the upper limit of the first value range, the value of the upper limit of the third value range is determined to be the upper limit of the first value range.

D5: obtain the third value range based on the lower limit and the upper limit of the third value range and the first value range.

The description for D5 may refer to the above description for C5, which is not repeated herein.

S302: exclude the third value range from the first value range to obtain the second value range.

As can be seen from the above description, the third value range may be a non-optional range of the second indication information; therefore, after obtaining the third value range, the third value range may be excluded from the first value range to obtain the second value range.

For example, a relationship among the first value range, the second value range, and the third value range may be as shown in the following Formula (15).

$$R = I - [i_{3,min}, i_{3,max}] \qquad \text{Formula (15)};$$

where R is the second value range.

As an example, to ensure the accuracy of the second value range and avoid an error, the relationship among the first value range, the second value range, and the third value range may be as shown in the following Formula (16).

$$R = I - [i_{3,min}, i_{3,max}] \cap I \qquad \text{Formula (16)};$$

where $R = \{i \mid i \in I, i \notin [i_{3,min}, i_{3,max}] \cap I\}$, $i$ is a value of the third value range.

Based on the embodiments shown in FIG. 5, after the terminal obtains the first indication information, the terminal may determine a non-optional range of the second indication information based on the first indication information and the first configuration information, that is, determine the third value range, then determine the second value range corresponding to the second indication information based on the non-optional range of the second indication information and the first value range, and then determine the second indication information from the second value range, avoiding determining the second indication information from the first value range with a larger range, thereby reducing processing complexity of acquiring channel information, helping to reduce overhead of feeding back indication information subsequently, and improving the performance of the communication system.

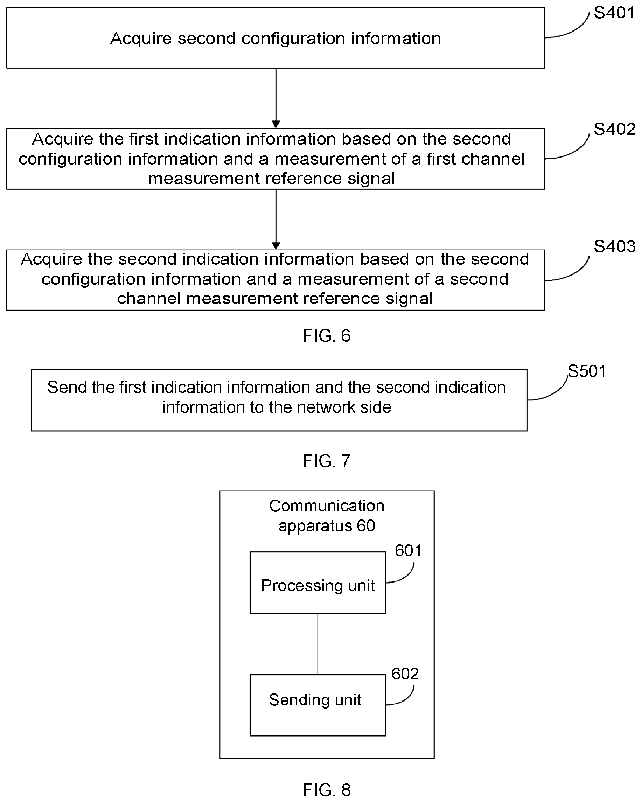

In some embodiments, as shown in FIG. 6, the embodiments of the present disclosure further provide a method for acquiring channel information; the method is applied to a terminal, and the terminal may be the terminal 110 shown in FIG. 2 above; the method includes the following steps S401 to S403.

S401: acquire second configuration information.

In some embodiments, to allow the terminal to quickly acquire first indication information corresponding to first channel information and second indication information corresponding to second channel information, to reduce processing complexity of acquiring channel information, and before the terminal receives a first channel measurement reference signal and a second channel measurement reference signal, the terminal acquires second configuration information to determine a value range of the first indication information and a value range of the second indication information. The second configuration information is used to configure a corresponding relationship in value ranges between the first indication information corresponding to the first channel information and the second indication information corresponding to the second channel information. The second configuration information is pre-configured, or configured by a network side. The terminal acquiring the second configuration information may be acquiring pre-configured second configuration information from its own memory, or may be the terminal receiving the second configuration information sent from the network side; the embodiments of the present disclosure do not limit the manner in which the terminal acquires the second configuration information.

S402: acquire the first indication information based on the second configuration information and a measurement of a first channel measurement reference signal.

In some embodiments, after the terminal receives the first channel measurement reference signal and the second channel measurement reference signal, the terminal may measure the first channel measurement reference signal to obtain the first channel information, and then obtain the first indication information corresponding to the first channel information based on the first channel information and the second configuration information.

In some embodiments, the second configuration information includes a configuration parameter of at least one fourth value range of the first indication information and a configuration parameter of at least one fifth value range of the second indication information, where each fourth value range corresponds to a fifth value range. That is, a value range of the first indication information is associated with a value range of the second indication information.

It should be noted that, a fourth value range may be an optional range of the first indication information, that is, the first indication information may be determined from this fourth value range; or it may be a non-optional range of the first indication information, that is, the first indication information cannot be determined from this fourth value range. A fifth value range may be an optional range of the second indication information, that is, the second indication information may be determined from this fifth value range; or it may be a non-optional range of the second indication information, that is, the second indication information cannot be determined from this fifth value range. Regarding how the terminal determines whether the at least one fourth value range and the at least one fifth value range indicated by the second configuration information are respectively an optional range or a non-optional range of the first indication information and the second indication information, the terminal and the network side may pre-negotiate that the at least one fourth value range and the at least one fifth value range indicated by the second configuration information are the optional range or the non-optional range of the first indication information and the second indication information; or, before the terminal receives the first channel measurement reference signal and the second channel measurement reference signal, the network side may send indication information to the terminal, where the indication information is used to indicate that the at least one fourth value range and the at least one fifth value range indicated by the second configuration information are respectively the optional range or the non-optional range of the first indication information and the second indication information, which is not limited in the embodiments of the present disclosure.

In some embodiments, the second configuration information includes the first value range, and the value of the first indication information and the value of the second indication information both belong to the first value range.

As an example, acquiring the first indication information based on the second configuration information and the measurement on the first channel measurement reference signal, may be that: the terminal obtains the first indication information based on a target fourth value range and the measurement on the first channel measurement reference signal. The target fourth value range is one of the at least one fourth value range.

In some embodiments, the target fourth value range may be pre-negotiated between the terminal and the network side, or may be indicated by the network side, which is not limited in the embodiments of the present disclosure.

As can be seen from the above description of the second configuration information, the second configuration information includes the configuration parameter of the at least one fourth value range of the first indication information; after the terminal acquires the second configuration information, the terminal may obtain the at least one fourth value range of the first indication information based on the configuration parameter of the at least one fourth value range. After receiving the first channel measurement reference signal, the terminal may perform measurement on the first channel measurement reference signal to obtain first channel information, and then, obtain the first indication information based on the first channel information and the target fourth value range.

In some embodiments, the configuration parameter of the fourth value range includes an upper limit of the fourth value range and a lower limit of the fourth value range. For each fourth value range among at least one fourth value range, the terminal may obtain the fourth value range based on an upper limit and a lower limit of the fourth value range.

S403: acquire the second indication information based on the second configuration information and a measurement of a second channel measurement reference signal.

As an example, acquiring the second indication information based on the second configuration information and the measurement on the second channel measurement reference signal, may be that: the terminal obtains the second indication information based on a target fifth value range and the measurement on the second channel measurement reference signal. The target fifth value range is one of at least one fifth value range.

In some embodiments, the target fifth value range may be pre-negotiated between the terminal and the network side, or may be indicated by the network side, which is not limited in the embodiments of the present disclosure.

As can be seen from the above description of the second configuration information, the second configuration information includes a configuration parameter of the at least one fifth value range of the second indication information. After the terminal acquires the second configuration information, the terminal may obtain the at least one fifth value range of the second indication information based on the configuration parameter of the at least one fifth value range. After receiving the second channel measurement reference signal, the terminal may perform measurement on the second channel measurement reference signal to obtain second channel information, and then, obtain the second indication information based on the second channel information and the target fifth value range.

In some embodiments, the configuration parameter of the fifth value range includes an upper limit of the fifth value range and a lower limit of the fifth value range. For each fifth value range among at least one fifth value range, the terminal may obtain the fifth value range based on an upper limit and a lower limit of the fifth value range.

It should be noted that the embodiments of the present disclosure do not limit the execution order of step S402 and step S403, for example, step S402 may be executed first, and then step S403 may be executed; for another example, step S403 may be executed first, and then step S402 may be executed. For another example, step S402 and step S403 may be executed simultaneously.

The following provides several specific examples to illustrate the second configuration information.

Exemplarily, taking an example in which the second configuration information includes a configuration parameter of a fourth value range and a configuration parameter of a fifth value range, it is assumed that the second configuration information is $(S_{1,min}, S_{1,max}, S_{2,min}, S_{2,max})$, where $S_{1,min}$ is a lower limit of the fourth value range, $S_{1,max}$ is an upper limit of the fourth value range, $S_{2,min}$ is a lower limit of the fifth value range, and $S_{2,max}$ is an upper limit of the fifth value range.

In a case where it is pre-negotiated between the terminal and the network side or it is pre-indicated by the network side that the fourth value range is an optional range of the first indication information and the fifth value range is an optional range of the second indication information, the terminal may determine the first indication information from $[S_{1,min}, S_{1,max}] \cap I$ based on the first channel information, and determine the second indication information from $[S_{2,min}, S_{2,max}] \cap I$ based on the second channel information, where I is the first value range.

In a case where it is pre-negotiated between the terminal and the network side or it is pre-indicated by the network side that the fourth value range is a non-optional range of the first indication information and the fifth value range is a non-optional range of the second indication information, the terminal may determine the first indication information from $R_1 = I - [S_{1,min}, S_{1,max}] \cap I$ based on the first channel information, and determine the second indication information from $R_2 = I - [S_{2,min}, S_{2,max}] \cap I$ based on the second channel information, where $R_1$ is an optional range of the first indication information and $R_2$ is an optional range of the second indication information.

Exemplarily, taking an example in which the second configuration information includes configuration parameters of two fourth value ranges and configuration parameters of two fifth value ranges, it is assumed that the second configuration information is $(S_{1,1,min}, S_{1,1,max}, S_{1,2,min}, S_{1,2,max}, S_{2,1,min}, S_{2,1,max}, S_{2,2,min}, S_{2,2,max})$, where $S_{1,1,min}$ is a lower limit of a 1st fourth value range, $S_{1,1,max}$ is an upper limit of the 1st fourth value range, $S_{1,2,min}$ is a lower limit of a 2nd fourth value range, $S_{1,2,max}$ is an upper limit of the 2nd fourth value range, $S_{2,1,min}$ is a lower limit of a 1st fifth value range, $S_{2,1,max}$ is an upper limit of the 1st fifth value range, $S_{2,2,min}$ is a lower limit of a 2nd fifth value range, and $S_{2,2,max}$ is an upper limit of the 2nd fifth value range. The 1st fourth value range corresponds to the 1st fifth value range, and the 2nd fourth value range corresponds to the 2nd fifth value range.

In a case where it is pre-negotiated between the terminal and the network side or it is pre-indicated by the network side that the fourth value range is an optional range of the first indication information and the fifth value range is an optional range of the second indication information, the terminal may determine the first indication information from $[S_{1,1,min}, S_{1,1,max}] \cap I$ based on the first channel information, and determine the second indication information from $[S_{2,1,min}, S_{2,1,max}] \cap I$ based on the second channel information.

Alternatively, the terminal may determine the first indication information from $[S_{1,2,min}, S_{1,2,max}] \cap I$ based on the first channel information, and determine the second indication information from $[S_{2,2,min}, S_{2,2,max}] \cap I$ based on the second channel information.

In a case where it is pre-negotiated between the terminal and the network side or it is pre-indicated by the network side that the fourth value range is a non-optional range of the first indication information and the fifth value range is a non-optional range of the second indication information, the terminal may determine the first indication information from $R_3 = I - [S_{1,1,min}, S_{1,1,max}] \cap I$ based on the first channel information, and determine the second indication information from $R_4 = I - [S_{2,1,min}, S_{2,1,max}] \cap I$ based on the second channel information, where $R_3$ is an optional range for the first indication information and $R_4$ is an optional range for the second indication information.

Alternatively, the terminal may determine the first indication information from $R_5 = I - [S_{1,2,min}, S_{1,2,max}] \cap I$ based on the first channel information, and determine the second indication information from $R_6 = I - [S_{2,2,min}, S_{2,2,max}] \cap I$ based on the second channel information, where $R_5$ is an optional range for the first indication information and $R_6$ is an optional range for the second indication information.

It should be noted that the above embodiments where the second configuration information includes a configuration parameter of a fourth value range and a configuration parameter of a fifth value range, or the second configuration information includes configuration parameters of two fourth value ranges and configuration parameters of two fifth value ranges, are merely exemplary, and the embodiments of the present disclosure do not limit the number of configuration parameters of fourth value ranges and configuration parameters of fifth value ranges included in the second configuration information.

Based on the embodiments shown in FIG. 6, by acquiring the second configuration information, the terminal enables an association between the value ranges of the independent first indication information and second indication information, thereby narrowing the optional ranges of the first indication information and the second indication information and avoiding determining the first indication information and the second indication information from the larger first value range, so as to reduce the processing complexity of acquiring channel information, help to reduce the overhead of feeding back the indication information subsequently, and improve the performance of the communication system.

In some embodiments, after acquiring the first indication information and the second indication information, that is, after the aforementioned step S102 or step S403, as shown in FIG. 7, the method may further include the following step: S501: send the first indication information and the second indication information to the network side.

The network side may be a base station, an antenna array panel on the base station, or an antenna array element port on the antenna array panel of the base station. The first indication information is used to indicate the first channel information, and the second indication information is used to indicate the second channel information.

The foregoing mainly introduces the solutions provided in the present disclosure from the perspective of interactions between various nodes. It can be understood that various nodes (for example, the terminal) include corresponding hardware structures and/or software modules to implement the aforementioned functions. Those skilled in the art should easily realize that, in conjunction with the exemplary algorithm steps described in the embodiments disclosed herein, the present disclosure can be implemented in the form of hardware or a combination of hardware and computer software. Whether a certain function is performed via the hardware or the computer software-driven hardware depends on the specific application and restrictive conditions of the design of the technical solutions. Professional technicians may use different methods to implement the described functions for each specific application, but such implementation should not be considered beyond the scope of the present disclosure.

FIG. 8 shows a composition schematic diagram of a communication apparatus provided in the embodiments of the present disclosure. As shown in FIG. 8, the communication apparatus 60 includes a processing unit 601 and a sending unit 602.

The communication apparatus 60 may be the terminal mentioned above or a chip in the terminal. When the communication apparatus 60 is configured to implement the functions of the terminal in the above embodiments, and each unit is specifically configured to implement the following functions.

The processing unit 601 is configured to: acquire first indication information corresponding to first channel information based on a measurement of a first channel measurement reference signal; and acquire second indication information corresponding to second channel information based on the first indication information and first configuration information, wherein the first configuration information is used to configure a relationship between the first indication information and the second indication information.

In some embodiments, the first configuration information comprises a first parameter and a first function. The first parameter is used to represent a spacing between the first indication information and the second indication information, and the spacing is an integer; and the first function is used to constrain a value of the second indication information to be within a first value range.

In some embodiments, the first function is specifically used to: determine that the value of the second indication information is a first value in response that the first value is within the first value range; determine that the value of the second indication information is an upper limit of the first value range in response that the first value is greater than the upper limit of the first value range; and determine that the value of the second indication information is a lower limit of the first value range in response that the first value is less than the lower limit of the first value range; wherein the first value is determined according to the value of the first indication information and the first parameter.

In some embodiments, the processing unit 601 is specifically configured to: determine a second value range corresponding to the second indication information from a first value range based on the first indication information and the first configuration information; and acquire the second indication information based on the second value range corresponding to the second indication information and a measurement of a second channel measurement reference signal.

In some embodiments, the first configuration information comprises a second parameter, a third parameter, a second function, a third function, and a fourth function. The second parameter is used to represent a spacing between the first indication information and a reference point of the second value range; the third parameter is used to represent a size of the second value range; the second function is used to constrain the reference point of the second value range to be within the first value range; the third function is used to constrain a lower limit of the second value range to be within the first value range; and the fourth function is used to constrain an upper limit of the second value range to be within the first value range.

In some embodiments, the first configuration information comprises a second parameter, a fourth parameter, a fifth parameter, a second function, a third function, and a fourth function. The second parameter is used to represent a spacing between the first indication information and a reference point of the second value range; the fourth parameter is used to represent a spacing between the reference point of the second value range and a lower limit of the second value range; the fifth parameter is used to represent a spacing between the reference point of the second value range and an upper limit of the second value range; the second function is used to constrain the reference point of the second value range to be within the first value range; the third function is used to constrain the lower limit of the second value range to be within the first value range; and the fourth function is used to constrain the upper limit of the second value range to be within the first value range.

In some embodiments, the processing unit 601 is specifically configured to: determine a third value range based on the first indication information and the first configuration information; and acquire the second value range by excluding the third value range from the first value range.

In some embodiments, the first configuration information comprises a sixth parameter, a seventh parameter, a fifth function, a sixth function, and a seventh function. The sixth parameter is used to represent a spacing between the first indication information and a reference point of the third value range; the seventh parameter is used to represent a size of the third value range; the fifth function is used to constrain the reference point of the third value range to be within the first value range; the sixth function is used to constrain a lower limit of the third value range to be within the first value range; and the seventh function is used to constrain an upper limit of the third value range to be within the first value range.

In some embodiments, the first configuration information comprises a sixth parameter, an eighth parameter, a ninth parameter, a fifth function, a sixth function, and a seventh function. The sixth parameter is used to represent a spacing between the first indication information and a reference point of the third value range; the eighth parameter is used to represent a spacing between the reference point of the third value range and a lower limit of the third value range; the ninth parameter is used to represent a spacing between the reference point of the third value range and an upper limit of the third value range; the fifth function is used to constrain the reference point of the third value range to be within the first value range; the sixth function is used to constrain the lower limit of the third value range to be within the first value range; and the seventh function is used to constrain the upper limit of the third value range to be within the first value range.

In some embodiments, the first indication information and the second indication information are precoding matrix indication information.

In some embodiments, the first configuration information is pre-configured, or configured on a network side.

In some embodiments, the sending unit 602 is configured to send the first indication information and the second indication information to a network side.

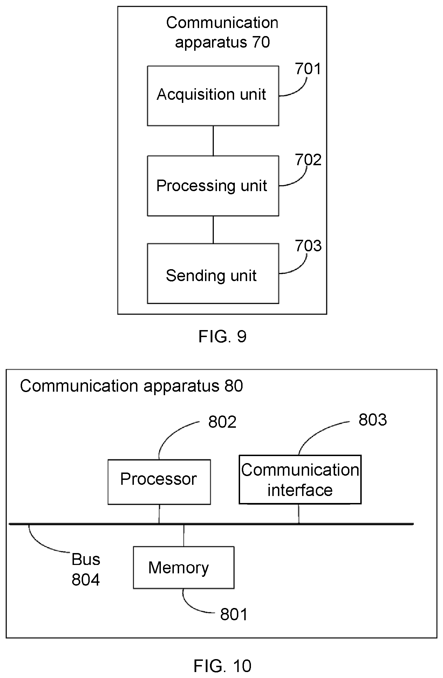

FIG. 9 shows a composition schematic diagram of another communication apparatus provided in the embodiments of the present disclosure. As shown in FIG. 9, the communication apparatus 70 includes an acquisition unit 701 and a processing unit 702. In some embodiments, the communication apparatus 70 further includes a sending unit 703.

The communication apparatus 70 may be the above terminal or a chip in the terminal. When the communication apparatus 70 is configured to implement functions of the terminal in the above embodiments, and each unit is specifically configured to implement the following functions.

The acquisition unit 701 is configured to acquire second configuration information, wherein the second configuration information is used to configure a corresponding relationship in value ranges between first indication information corresponding to first channel information and second indication information corresponding to second channel information.

The processing unit 702 is configured to acquire the first indication information based on the second configuration information and a measurement of a first channel measurement reference signal; and acquire the second indication information based on the second configuration information and a measurement of a second channel measurement reference signal.

In some embodiments, the second configuration information comprises a configuration parameter of at least one fourth value range of the first indication information and a configuration parameter of at least one fifth value range of the second indication information, and each of the fourth value range corresponds to one of the fifth value range.

In some embodiments, the processing unit 702 is specifically configured to: acquire the first indication information based on a target fourth value range and the measurement of the first channel measurement reference signal, wherein the target fourth value range is one of the at least one fourth value range.

In some embodiments, the processing unit 702 is specifically configured to: acquire the second indication information based on a target fifth value range and the measurement of the second channel measurement reference signal, wherein the target fifth value range is a fifth value range corresponding to the target fourth value range, among the at least one fifth value range.

In some embodiments, the configuration parameter of the fourth value range comprises an upper limit of the fourth value range and a lower limit of the fourth value range.

In some embodiments, the configuration parameter of the fifth value range comprises an upper limit of the fifth value range and a lower limit of the fifth value range.

In some embodiments, the first indication information and the second indication information are precoding matrix indication information.

In some embodiments, the second configuration information is pre-configured, or configured on a network side.

In some embodiments, the sending unit 703 is configured to send the first indication information and the second indication information to a network side.

It should be noted that the units in FIG. 8 or FIG. 9 may also be referred to as modules, and for example, the processing unit may be referred to as a processing module. In addition, in the embodiments shown in FIG. 8 and FIG. 9, the names of the units may not be the names shown in the figures, and for example, the acquisition unit may also be referred to as a communication unit, and the sending unit may also be referred to as a communication unit.

If each unit in FIG. 8 and FIG. 9 is implemented in the form of a software functional module, and sold or used as a separate product, the unit may be stored in a computer readable storage medium. Based on this understanding, the technical solutions of the embodiments of the present disclosure may be essentially, or a part of the technical solutions that contributes to the existing technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of media capable of storing program codes, such as a U disk (USB disk), a mobile hard disk, a read-only memory (ROM), a random access memory (RAM), a magnetic disk, or an optical disk, etc.

In a case where the above communication apparatus 60 or communication apparatus 70 implements functions of the above integrated modules in a form of hardware, the embodiments of the present disclosure provide a structural schematic diagram of a communication apparatus. As shown in FIG. 10, the communication apparatus 80 includes: a processor 802, a communication interface 803, and a bus 804. Optionally, the communication apparatus 80 may further include a memory 801.

The processor 802 may implement or execute various illustrative logical blocks, modules and circuits described in conjunction with the contents of the present disclosure. The processor 802 may be a central processing unit, a general-purpose processor, a digital signal processor, an application specific integrated circuit, a field programmable gate array or any other programmable logic device, a transistor logic device, a hardware component, or any combination thereof, which may implement or execute various illustrative logical blocks, modules and circuits described in conjunction with the contents disclosed in the present disclosure. The processor 802 may also be a combination capable of implementing computing functions, for example, including a combination of one or more microprocessors, or a combination of a digital signal processor (DSP) and a microprocessor.

The communication interface 803 is configured to connect with other devices through a communication network. The communication network may be an Ethernet, a radio access network, a wireless local area network (WLAN), or the like.

The memory 801 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As a possible implementation, the memory 801 may exist independently of the processor 802, and the memory 801 may be connected to the processor 802 through the bus 804, for storing instructions or program codes. When calling and executing the instructions or the program codes stored in the memory 801, the processor 802 is capable of implementing the method for acquiring channel information provided in the embodiments of the present disclosure.

In another possible implementation manner, the memory 801 may also be integrated with the processor 802.

The bus 804 may be an extended industry standard architecture (EISA) bus or the like. The bus 804 may be classified into an address bus, a data bus, and a control bus, or the like. For the convenience of representation, only one thick line is used in FIG. 10 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the terminal is divided into different functional modules to complete all or a part of the functions mentioned above.

The embodiments of the present disclosure further provide a computer-readable storage medium ( e.g., a non-transitory computer readable storage medium). All or a part of the procedures in the method embodiments mentioned above may be completed by related hardware indicated by computer instructions, and the program may be stored in the computer-readable storage medium mentioned above. The program, when executed, may include the procedures of the method embodiments mentioned above. The computer readable storage medium may be a memory of the device or apparatus of any one of the aforementioned embodiments. The above-mentioned computer readable storage medium may also be an external storage device of the terminal mentioned above, e.g., a plug-in hard disk, a smart memory card (smart media card, SMC), a secure digital (SD) card, a flash card, etc., equipped on the terminal mentioned above. Furthermore, the computer-readable storage medium mentioned above may further include both an internal storage unit and an external storage device of the terminal mentioned above. The computer-readable storage medium mentioned above is used to store the computer program mentioned above, and other programs and data required for the terminal mentioned above. The computer-readable storage medium mentioned above may further be used to temporarily store data that has been output or is to be output.

The embodiments of the present disclosure further provide a computer program product, the computer product contains a computer program, the computer program product, when executed on a computer, causes the computer to perform any method for acquiring channel information in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with specific features and embodiments thereof, it is apparent that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents thereof within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above is merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure should be based on the protection scope of the claims.

**Claims**

1. A method for acquiring channel information, wherein the method comprises:

   acquiring first indication information corresponding to first channel information based on a measurement of a first channel measurement reference signal; and
   acquiring second indication information corresponding to second channel information based on the first indication information and first configuration information, wherein the first configuration information is used to configure a relationship between the first indication information and the second indication information.

2. The method of claim 1, wherein the first configuration information comprises a first parameter and a first function; wherein the first parameter is used to represent a spacing between the first indication information and the second indication information, and the spacing is an integer; and the first function is used to constrain a value of the second indication information to be within a first value range.

3. The method of claim 2, wherein the first function is specifically used to:

   determine that the value of the second indication information is a first value in response that the first value is within the first value range;

determine that the value of the second indication information is an upper limit of the first value range in response that the first value is greater than the upper limit of the first value range; and

determine that the value of the second indication information is a lower limit of the first value range in response that the first value is less than the lower limit of the first value range;

wherein the first value is determined according to the value of the first indication information and the first parameter.

4. The method of claim 1, wherein acquiring the second indication information corresponding to the second channel information based on the first indication information and the first configuration information, comprises:

determining a second value range corresponding to the second indication information from a first value range based on the first indication information and the first configuration information; and
acquiring the second indication information based on the second value range corresponding to the second indication information and a measurement of a second channel measurement reference signal.

5. The method of claim 4, wherein the first configuration information comprises a second parameter, a third parameter, a second function, a third function, and a fourth function; wherein the second parameter is used to represent a spacing between the first indication information and a reference point of the second value range; the third parameter is used to represent a size of the second value range; the second function is used to constrain the reference point of the second value range to be within the first value range; the third function is used to constrain a lower limit of the second value range to be within the first value range; and the fourth function is used to constrain an upper limit of the second value range to be within the first value range.

6. The method of claim 4, wherein the first configuration information comprises a second parameter, a fourth parameter, a fifth parameter, a second function, a third function, and a fourth function; wherein the second parameter is used to represent a spacing between the first indication information and a reference point of the second value range; the fourth parameter is used to represent a spacing between the reference point of the second value range and a lower limit of the second value range; the fifth parameter is used to represent a spacing between the reference point of the second value range and an upper limit of the second value range; the second function is used to constrain the reference point of the second value range to be within the first value range; the third function is used to constrain the lower limit of the second value range to be within the first value range; and the fourth function is used to constrain the upper limit of the second value range to be within the first value range.

7. The method of claim 4, wherein determining the second value range corresponding to the second indication information from the first value range based on the first indication information and the first configuration information, comprises:

determining a third value range based on the first indication information and the first configuration information; and
acquiring the second value range by excluding the third value range from the first value range.

8. The method of claim 7, wherein the first configuration information comprises a sixth parameter, a seventh parameter, a fifth function, a sixth function, and a seventh function; wherein the sixth parameter is used to represent a spacing between the first indication information and a reference point of the third value range; the seventh parameter is used to represent a size of the third value range; the fifth function is used to constrain the reference point of the third value range to be within the first value range; the sixth function is used to constrain a lower limit of the third value range to be within the first value range; and the seventh function is used to constrain an upper limit of the third value range to be within the first value range.

9. The method of claim 7, wherein the first configuration information comprises a sixth parameter, an eighth parameter, a ninth parameter, a fifth function, a sixth function, and a seventh function; wherein the sixth parameter is used to represent a spacing between the first indication information and a reference point of the third value range; the eighth parameter is used to represent a spacing between the reference point of the third value range and a lower limit of the third value range; the ninth parameter is used to represent a spacing between the reference point of the third value range and an upper limit of the third value range; the fifth function is used to constrain the reference point of the third value range to be within the first value range; the sixth function is used to constrain the lower limit of the third value range to be within the first value range; and the seventh function is used to constrain the upper limit of the third value range to be within the first value range.

10. The method of claim 1, wherein the first indication information and the second indication information are precoding matrix indication information.

11. The method of claim 1, wherein the first configuration information is preconfigured, or configured on a network side.

12. The method of claim 1, wherein the method further comprises:
sending the first indication information and the second indication information to a network side.

13. A method for acquiring channel information, wherein the method comprises:

acquiring second configuration information, wherein the second configuration information is used to configure a corresponding relationship in value ranges between first indication information corresponding to first channel information and second indication information corresponding to second channel information;
acquiring the first indication information based on the second configuration information and a measurement of a first channel measurement reference signal; and
acquiring the second indication information based on the second configuration information and a measurement of a second channel measurement reference signal.

14. The method of claim 13, wherein the second configuration information comprises a configuration parameter of at least one fourth value range of the first indication information and a configuration parameter of at least one fifth value range of the second indication information, and each of the fourth value range corresponds to one of the fifth value range.

15. The method of claim 14, wherein acquiring the first indication information based on the second configuration information and the measurement of the first channel measurement reference signal, comprises:
acquiring the first indication information based on a target fourth value range and the measurement of the first channel measurement reference signal, wherein the target fourth value range is one of the at least one fourth value range.

16. The method of claim 15, wherein acquiring the second indication information based on the second configuration information and the measurement of the second channel measurement reference signal, comprises:
acquiring the second indication information based on a target fifth value range and the measurement of the second channel measurement reference signal, wherein the target fifth value range is a fifth value range corresponding to the target fourth value range, among the at least one fifth value range.

17. The method of claim 14, wherein the configuration parameter of the fourth value range comprises an upper limit of the fourth value range and a lower limit of the fourth value range.

18. The method of claim 14, wherein the configuration parameter of the fifth value range comprises an upper limit of the fifth value range and a lower limit of the fifth value range.

19. The method of claim 13, wherein the first indication information and the second indication information are precoding matrix indication information.

20. The method of claim 13, wherein the second configuration information is preconfigured, or configured on a network side.

21. The method of claim 13, wherein the method further comprises:
sending the first indication information and the second indication information to a network side.

22. A communication apparatus, comprising: a processor and a memory;

wherein the memory stores instructions executable by the processor; and
the processor, upon executing the instructions, enables the communication apparatus to implement the method of any one of claims 1 to 21.

23. A computer-readable storage medium, wherein the computer-readable storage medium comprises computer instructions; and the computer instructions, upon running on a computer, enable the computer to perform the method of any one of claims 1 to 21.

FIG. 1

FIG. 2

On the basis of measurement for a first channel measurement reference signal, obtain first indication information corresponding to first channel information ⟋ S101

On the basis of the first channel information and first configuration information, obtain second indication information corresponding to second channel information ⟋ S102

FIG. 3

Determine a second value range corresponding to the second indication information from a first value range based on the first indication information and the first configuration information ⟋ S201

Acquire the second indication information based on the second value range corresponding to the second indication information and the measurement of the second channel measurement reference signal ⟋ S202

FIG. 4

Determine a third value range based on the first indication information and the first configuration information ⟋ S301

Exclude the third value range from the first value range to obtain the second value range ⟋ S302

FIG. 5

Acquire second configuration information — S401

Acquire the first indication information based on the second configuration information and a measurement of a first channel measurement reference signal — S402

Acquire the second indication information based on the second configuration information and a measurement of a second channel measurement reference signal — S403

FIG. 6

Send the first indication information and the second indication information to the network side — S501

FIG. 7

Communication apparatus 60

Processing unit — 601

Sending unit — 602

FIG. 8

Communication
apparatus 70

Acquisition unit 701

Processing unit 702

Sending unit 703

FIG. 9

Communication apparatus 80

Processor 802

Communication
interface 803

Bus
804

Memory

801

FIG. 10

## INTERNATIONAL SEARCH REPORT

| International application No. |
|---|
| **PCT/CN2024/090896** |

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

IPC:H04L H04W G06F

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI, 3GPP, IEEE: 信道信息, 预编码矩阵, 秩指示, 配置, 算法, 预测, 估计, 测量, 间距, 映射, 函数, 协同, 复杂, channel information, CSI, PMI, RI, configuration, algorithm, predict, estimat+, measur+, mapp+, function, cooperation, complex

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021258991 A1 (QUALCOMM INC.) 19 August 2021 (2021-08-19) description, paragraphs 93-144, and claims 1-15 | 1, 10-12, 22, 23 |
| A | US 2021258991 A1 (QUALCOMM INC.) 19 August 2021 (2021-08-19) description, paragraphs 93-144, and claims 1-15 | 2-9, 13-21 |
| A | CN 116015560 A (NANJING SHANGTIE ELECTRONIC ENGINEERING CO., LTD.) 25 April 2023 (2023-04-25) entire document | 1-23 |
| A | US 2018270087 A1 (NEC CORP.) 20 September 2018 (2018-09-20) entire document | 1-23 |
| A | WO 2023116516 A1 (HUAWEI TECHNOLOGIES CO., LTD.) 29 June 2023 (2023-06-29) entire document | 1-23 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 August 2024** | **02 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/090896**

| Patent document cited in search report | | | Publication date (day/month/year) | Patent family member(s) | | | Publication date (day/month/year) |
|---|---|---|---|---|---|---|---|
| US | 2021258991 | A1 | 19 August 2021 | EP | 4104374 | A1 | 21 December 2022 |
| | | | | WO | 2021162859 | A1 | 19 August 2021 |
| | | | | US | 11743889 | B2 | 29 August 2023 |
| CN | 116015560 | A | 25 April 2023 | None | | | |
| US | 2018270087 | A1 | 20 September 2018 | JP | 2018157267 | A | 04 October 2018 |
| | | | | JP | 7003424 | B2 | 20 January 2022 |
| | | | | US | 10411915 | B2 | 10 September 2019 |
| WO | 2023116516 | A1 | 29 June 2023 | None | | | |

Form PCT/ISA/210 (patent family annex) (July 2022)

**REFERENCES CITED IN THE DESCRIPTION**

**Patent documents cited in the description**

- CN 202311270791